# EUROPÄISCHE PATENTANMELDUNG

(11) **EP 1 058 140 A1**
(43) Veröffentlichungstag der Anmeldung: **06.12.2000**
(21) Anmeldenummer: 00440145.1
(22) Anmeldetag: 19.05.2000
(51) Int. Cl.: G02B 6/44

(54) **Elektrisches oder optisches Kabel mit Funktionserhalt im Brandfall**

(30) Priorität: 05.06.1999 DE 29909835 U
(71) Anmelder: ALCATEL, 75008 Paris (FR)
(72) Erfinder: Nothofer, Klaus, 40699 Erkrath (DE); Chojetzki, Christoph, D-07743 Jena (DE); Bonicel, Jean-Pierre, 92500 Ruell Malmaison (FR)
(74) Vertreter: Rausch, Gabriele, Dr.

(57) **Zusammenfassung**

Es wird ein elektrisches oder optisches Kabel mit Funktionserhalt im Brandfalle beschrieben, welches aus einer Seele (1,2,3) mit isolierten metallischen Leitern und/oder Lichtwellenleitern (2), einem die Seele mit in Längsrichtung des Kabels überlappenden Bandkanten (5) umhüllenden Metallband (4) sowie einer auf dem Metallband (4) aufliegenden wendelförmig verlaufenden Bewicklung (6) aus flammbeständigem Material besteht.

## Beschreibung

Die Erfindung betrifft ein elektrisches oder optisches Kabel mit verbessertem Funktionserhalt im Brandfall.

Elektrische sowie optische Kabel enthalten in ihrer Kabelseele aber auch im Kabelmantel Kunststoffe, die bei erhöhten Temperaturen, wie sie z. B. bei einem Brand auftreten, dazu neigen, Gase abzuspalten bzw. freizusetzen, die brennbar sind und von daher den Brand nähren. Man hat versucht, den Kunststoffen solche Stoffe zuzumischen, welche z. B. Wasser bzw. Wasserdampf abspalten und dadurch die Temperatur im Kabel über einen bestimmten Zeitraum niedrig halten. Dadurch wird erreicht, daß die Freisetzung brennbarer Gase aus dem Kunststoffmaterial verzögert wird.

Als Beispiel für solche Zusätze sei Aluminiumtrioxyhydrat genannt.

Die wirksame Menge an diesen Zusatzstoffen ist jedoch so hoch, daß das mit diesen Zusatzstoffen versetzte Material schwer verarbeitbar und im verarbeiteten Zustand wenig biegbar ist.

Aus der EP 0 158 433 ist ein flammgeschütztes dielektrisches Kabel bekannt, welches aus einem Zentralelement mit darum herumverseilten Lichtwellenleitern besteht. Um die Lage aus Lichtwellenleitern ist ein Polyesterband zur Stabilisierung der Lichtwellenleiter herumgewickelt. Eine Lage aus Fäden aus flammfestem Material wie z. B. Mica ist auf das Polyesterband aufgelegt. Auf dieser Lage befindet sich eine Armierungslage aus synthetischem Kunststoff. Eine weitere Lage aus Fäden aus feuerfestem Material liegt auf der Armierungslage auf. Als Außenmantel dient ein Mantel aus selbstverlöschendem Kunststoff.

Das bekannte Kabel kann über einen bestimmten Zeitraum im Brandfalle seine Funktionen aufrechterhalten. Bei einem länger andauernden Brand werden jedoch aus den Beschichtungsmaterialien für die Lichtwellenleiter sowie der Armierungslage gasförmige Zersetzungsprodukte frei, die nach außen dringen. Diese Zersetzungsprodukte sind brennbar und von daher in der Lage, den Brand entlang dem Kabel fortzuleiten.

Der vorliegenden Erfindung liegt die Aufgabe zugrunde, ein Kabel bereitzustellen, welches im Brandfall einen Austritt von brennbaren Bestandteilen aus dem Kabelinnern verhindert und von daher eine Ausbreitung der Flammen nicht fördert. Darüberhinaus soll das Kabel auch im Brandfall seine Funktionen über einen längeren Zeitraum aufrechterhalten.

Diese Aufgabe wird durch die Merkmale des Anspruchs 1 gelöst.

Weitere vorteilhafte Ausgestaltungen der Erfindung sind in den Unteransprüchen erfaßt.

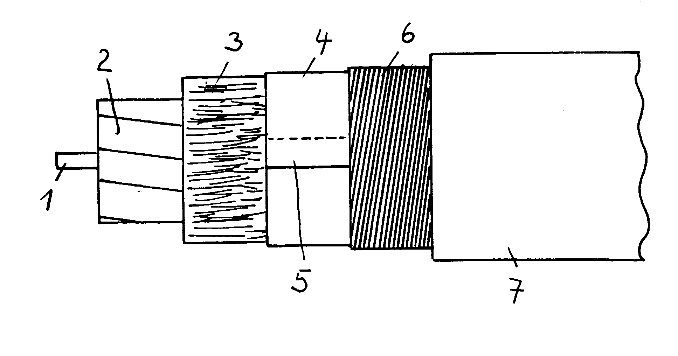

Die Erfindung ist anhand des in der Figur schematisch dargestellten Ausführungsbeispiels näher erläutert.

In der Figur ist mit 1 ein sogenanntes Zentralelement bezeichnet, welches z. B. ein Stahldraht, ein Strang aus glasfaserverstärktem Kunststoff oder ein Strang aus Polyaramidfasern sein kann. Um das Zentralelement 1 sind Lichtwellenleiteradern 2 herumverseilt, die aus einer Kunststoffhülle mit darin angeordneten Lichtwellenleitern bestehen. Eine Schicht 3 aus Galsseidefäden umgibt die Lichtwellenleiteradern. Die Schicht 3 dient als zusätzliches Zugelement. Die Schicht 3 ist von einem Metallband 4 umgeben, welches eine in Längsrichtung des Kabels verlaufende Überlappungsnaht 5 der Bandkanten aufweist. Das Metallband 4 besteht aus Stahl, vorzugsweise aus rostfreiem Stahl, und besitzt eine Wanddicke zwischen 0,1 bis 0,5 mm. Auf der aus dem Metallband 4 gebildeten Hülle ist eine Bewicklung 6 angeordnet, die stramm auf der darunterliegenden Hülle aufliegt. Dadurch wird erreicht, daß der im Bereich der Überlappung 5 befindliche Spalt zwischen den Bandkanten weitestgehend geschlossen wird und damit vermieden wird, daß das Metallband 4 bei Beflammung an der Überlappung aufspringt und in größerem Ausmaß brennbare Bestandteile aus dem Kabelinnern durch den Spalt nach außen quellen.

Die Bewicklung 6 kann aus einem dünnen Draht oder einem dünnen Band aus Stahl, vorzugsweise aus nichtrostendem Stahl, hergestellt sein.

Wenn die Bewicklung aus einem bandförmigen Material besteht, ist es von Vorteil, wenn das Band mit überlappenden Bandkanten gewickelt wird.

Das Metallband 4 und die Bewicklung 6 haben noch den Vorteil, daß im Brandfall die Wärme in Längsrichtung des Kabels abgeleitet wird und somit eine örtliche Überhitzung vermieden ist.

Eine dichte Bewicklung 6, insbesondere wenn ein Band mit überlappenden Bandkanten verendet wird, unterstützt noch den Effekt der Abdichtung nach außen.

Ein Außenmantel 7, der aus flammwidrigem Kunststoff besteht, bildet die äußere Hülle des Kabels.

Dadurch, daß ein Austritt von brennbaren Bestandteilen aus dem Kabel verhindert wird, kann die Wanddicke des Mantels 7 geringer als sonst üblich gewählt werden.

Die Erfindung ist anwendbar für alle Kabel, die in einer brandgefährdeten Umgebung verlegt werden sollen. Sie ist insbesondere für optische Kabel vorgesehen.

## Patentansprüche

1. Elektrisches oder optisches Kabel mit Funktionserhalt im Brandfalle, bestehend aus einer Seele (1,2,3) mit isolierten metallischen Leitern und/oder Lichtwellenleitern (2), einem die Seele mit in Längsrichtung des Kabels überlappenden Bandkanten (5) umhüllenden Metallband (4) sowie einer auf dem Metallband (4) aufliegenden wendelförmig verlaufenden Bewicklung (6) aus flammbeständigem Material.

2. Kabel nach Anspruch 1, **dadurch gekennzeichnet,** daß zwischen den elektrischen Leitern und/oder den Lichtwellenleitern (2) und dem Metallband (4) eine Schicht (3) aus einem zugfesten Werkstoff angeordnet ist.

3. Kabel nach Anspruch 2, **dadurch gekennzeichnet,** daß die Schicht (3) aus Glasfasern besteht.

4. Kabel nach Anspruch 1 oder einem der folgenden, **dadurch gekennzeichnet,** daß das Metallband (4) aus Stahl besteht.

5. Kabel nach Anspruch 1 oder einem der folgenden, **dadurch gekennzeichnet,** daß die Bewicklung (6) aus einem langgestreckten Gut mit rundem oder flachem Querschnitt besteht.

6. Kabel nach Anspruch 1 oder einem der folgenden, **dadurch gekennzeichnet,** daß die Bewicklung (6) aus einem eng gewickelten Stahldraht besteht.

7. Kabel nach Anspruch 1 oder einem der folgenden, **dadurch gekennzeichnet,** daß die Bewicklung (6( aus einem Flachband aus Stahl besteht.

8. Kabel nach Anspruch 7, **dadurch gekennzeichnet,** daß das Flachband mit überlappenden Bandkanten gewickelt ist.

9. Kabel nach Anspruch 1 oder einem der folgenden, **dadurch gekennzeichnet,** daß sowohl das Metallband (4) als auch die Bewicklung (6) aus Edelstahl besteht.

10. Kabel nach einem der Ansprüche 1 bis 9, **dadurch gekennzeichnet,** daß auf der Bewicklung (6) ein Mantel (7) aus einem flammfest gemachten Kunststoff angeordnet ist.
